# EUROPÄISCHE PATENTSCHRIFT

(11) **EP 1 179 503 B1**
(45) Veröffentlichungstag und Bekanntmachung des Hinweises auf die Patenterteilung: **07.01.2004**
(21) Anmeldenummer: 01250252.2
(22) Anmeldetag: 05.07.2001
(51) Int. Cl.: B66C 23/84, B66C 23/36

(54) **Mobilkran mit einer lösbaren, den unterwagen mit dem oberwagen verbindenden kupplung**
Mobile crane with a detachable coupling joining upper and lower works
Grue mobile avec couplage démontable pour attacher le châssis supérieur au châssis inférieur

(30) Priorität: 09.08.2000 DE 10039573
(43) Veröffentlichungstag der Anmeldung: 13.02.2002
(73) Patentinhaber: Terex-Demag GmbH & Co. KG, 66482 Zweibrücken (DE)
(72) Erfinder: Weckbecker, Alfons, 66482 Zweibrücken (DE)
(74) Vertreter: Meissner, Peter E., Dipl.-Ing.

(56) Entgegenhaltungen:
- DE-U- 29 508 567
- US-A- 3 921 817
- US-A- 4 161 344

## Beschreibung

Die Erfindung betrifft einen Mobilkran mit einer lösbaren, den Unterwagen mit dem Oberwagen verbindenden Kupplung gemäß dem Oberbegriff des Patentanspruches 1.

Bei Mobil- oder Fahrzeugkränen mit großem Hubvermögen werden sowohl der Unterwagen als auch der Oberwagen mit Ausleger so schwer, dass ein separater Transport des Oberwagens mit Ausleger auf einem besonderen Transportfahrzeug, insbesondere Tieflader, erfolgen muss. Zu diesem Zweck muss der drehbar auf dem Unterwagen gelagerte Oberwagen von diesem lösbar sein. Eine der Forderungen dabei ist, dass die Kupplung so gestaltet ist, dass der Oberwagen einfach und schnell vom Unterwagen sich lösen und einfach und schnell wieder auf diesen aufsetzen und mit diesem kuppeln lässt.

Eine solche Kupplung ist aus der US 3,921,817 bekannt. Sie besteht aus einem eine Außenverzahnung aufweisenden, fest mit dem Unterwagen verbundenen Ring. Auf der Innenseite dieses feststehenden Ringes ist drehbar ein weiterer Ring gelagert, der über den Umfang verteilt mit nach innen sich erstreckenden Stegen versehen ist. Am Oberwagen sind zwei gelenkig gelagerte Segmente angeordnet, die auf der Außenseite über den Umfang verteilt mit nach außen sich erstreckenden Stegen versehen sind, wobei die Lücken dazwischen etwas größer sind als die Breite der Stege des Innenringes. Nach dem Aufsetzen des Oberwagens werden durch Betätigung zweier Kolben-Zylindereinheiten die beiden Segmente an den Innenring gedrückt und durch relatives Verdrehen zueinander wie ein Bajonett-Verschluss miteinander gekuppelt. Das Antriebsritzel des Drehwerkes ist am Oberwagen gelagert und kommt beim Aufsetzen des Oberwagens mit der Außenverzahnung des feststehenden Ringes in Eingriff. Die Verbindung zwischen den beiden Segmenten und dem drehbaren Innenring erfolgt über mehrere, über den Umfang auf dem drehbaren Innenring angeordnete verstellbare Kulissensteine.

Eine verbesserte Kupplung ist in der DE 29 508 567 U1 offenbart. Diese Kupplung besteht aus einem mit dem Unterwagen verbundenen Haltering und einem axialen zylindrischen Ringfortsatz eines drehbar am Oberwagen gelagerten außen verzahnten Ringes. Der Haltering ist mit radial nach innen gerichteten und der Ringfortsatz mit radial nach außen weisenden klauenartigen Stegen versehen, die gleichmäßig über den Umfang verteilt angeordnet sind. Sie überdecken zumindest teilweise einen gemeinsamen zur Drehachse konzentrischen Ringraum und weisen einen so großen Abstand voneinander auf, dass die Stege des einen Teils durch die Steglücken des anderen Teils in axialer Richtung in zueinander versetzten radialen Ebenen geschoben werden können. Durch Drehung des verzahnten Ringes hintergreifen die Stege des einen Teils wie bei einem Bajonett-Verschluss die Stege des anderen Teils.

Nachteilig bei den bekannten Konstruktionen ist, dass die mit dieser Kupplung übertragbaren Kräfte begrenzt sind.

Aufgabe der Erfindung ist es, eine lösbare den Unterwagen mit dem Oberwagen verbindende Kupplung für einen Mobilkran anzugeben, mit der größere Kräfte insbesondere für Groß-Gitterkrane übertragen werden können.

Diese Aufgabe wird ausgehend vom Oberbegriff in Verbindung mit den kennzeichnenden Merkmalen des Anspruches 1 gelöst. Vorteilhafte Weiterbildungen sind jeweils Gegenstand von Unteransprüchen.

Nach der Lehre der Erfindung weist der komplementär ausgebildete Ring sowohl auf der Innenseite als auch auf der Außenseite gleich lange Abschnitte mit Ausnehmungen und gleich lange Abschnitte mit radial gerichteten Stegen auf und der mit der Außenverzahnung versehene Ring ist komplementär dazu ebenfalls mit Ausnehmungen und Stegen versehen. Wahlweise können sich Steg und Ausnehmung sowie Steg und Steg bzw. Ausnehmung und Ausnehmung einander gegenüberstehen. Aus Herstellgründen wird man die letztgenannte Variante vorziehen. Die vorgeschlagene Anordnung hat den Vorteil, dass damit große Kräfte übertragen werden können und am Mittelring keine einseitigen Momente auftreten.

Der mit der Außenverzahnung versehene Ring ist nach einem weiteren Merkmal der Erfindung als mehrreihige Rollendrehverbindung ausgebildet. Vorzugsweise besteht die Rollendrehverbindung aus einem einteiligen oder zweiteiligen feststehenden Ring und zwei oder drei ringförmigen drehbaren Elementen, die über Schrauben miteinander verbunden sind. Für eine große Kraftübertragung hat sich eine fünfreihige bzw. sechsreihige Rollendrehverbindung als günstig herausgestellt, wobei vorzugsweise der fünfte Rollensatz auf der Außenseite und der sechste Rollensatz auf der Innenseite des feststehenden Ringes angeordnet wird.

Vorzugsweise ist der komplementär ausgebildete einteilige oder zweiteilige Ring am Oberwagen befestigt, wobei die Stege zum Unterwagen gerichtet sind. Von der Gewichtsverteilung her hat es sich als günstig erwiesen, das Antriebsritzel mitsamt dem Drehwerk am Unterwagen zu befestigen und zu lagern. Bei sehr großen Durchmessern ist die Anordnung von zwei sich einander gegenüberliegenden Drehwerken von Vorteil.

Weitere Merkmale, Vorteile und Einzelheiten der Erfindung ergeben sich aus der nachfolgenden Beschreibung von in einer Zeichnung dargestellten Ausführungsbeispielen. Es zeigen:
- Figur 1: in einer Draufsicht ein Teilsegment der erfindungsgemäß ausgebildeten Kupplung im aufgesetzten Zustand
- Figur 2: wie Figur 1 aber im gekuppelten Zustand
- Figur 3: einen Schnitt in Richtung A-A in Figur 2
- Figur 4: wie Figur 3, aber eine weitere Ausführungsform.

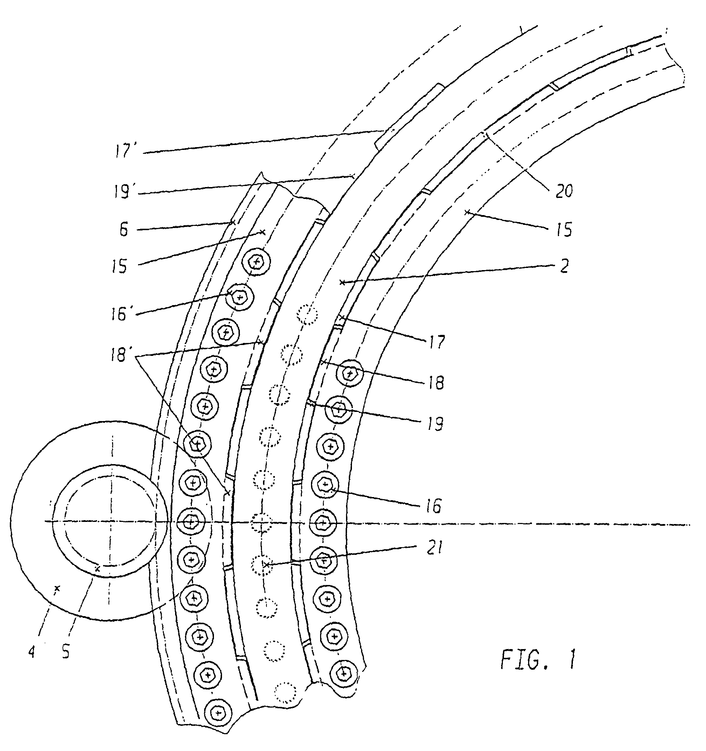

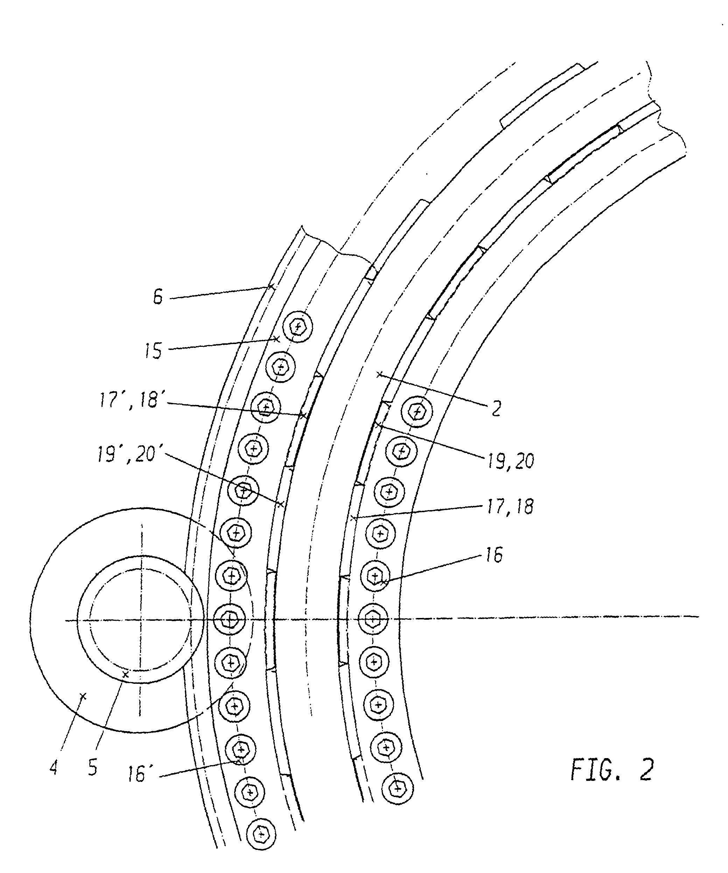

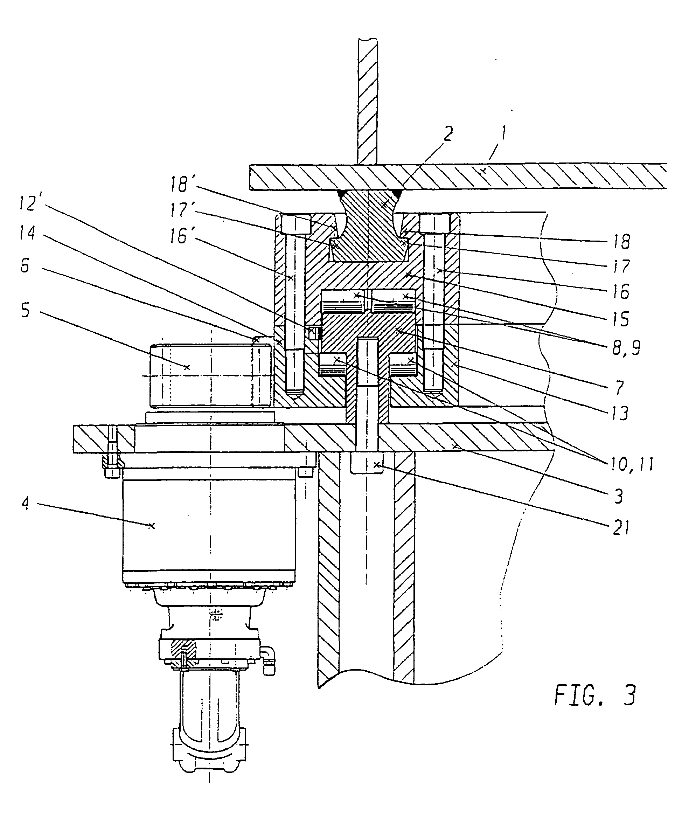

In Figur 1, 2 sind in einer Draufsicht und in Figur 3 in einem Schnitt ein Teilsegment der erfindungsgemäß ausgebildeten Kupplung dargestellt. Auf einer Grundplatte 1 des Oberwagens ist auf der Unterseite ein zwei Stege 17, 17' aufweisender Ring 2 befestigt. Auf einer Bodenplatte 3 des Unterwagens ist auf der Unterseite ein Drehwerk 4 befestigt, auf dessen Abtriebswelle ein Ritzel 5 angeordnet ist. Dieses Ritzel 5 kämmt mit der Außenverzahnung 6 eines als Rollendrehverbindung ausgebildeten Ringes zusammen. Je nach Größe des Durchmessers kann die Anordnung von zwei Drehwerken erforderlich sein, wobei diese sich einander gegenüberliegen. Die in dieser Ausführungsform fünfreihige Rollendrehverbindung besteht aus einem auf der Bodenplatte 3 mittels Schrauben 21 befestigten feststehenden Ring 7. Dieser ist so ausgebildet, dass er insgesamt fünf Rollensätze 8 - 11, 12' aufnehmen kann. Zwei Rollensätze 8, 9 sind auf der Oberseite und zwei Rollensätze 10, 11 auf der Unterseite sowie der fünfte Rollensatz 12' auf der Außenseite des feststehenden Ringes 7 angebracht. Gehalten werden die Rollensätze 8 - 11, 12' durch insgesamt drei ringförmige drehbare Elemente 13 - 15, die den feststehenden Ring 7 umfassen. Zwei Elemente 13, 14 sind spiegelbildlich zueinander ausgebildet. Gehalten werden die ringförmigen Elemente 13 - 15 durch sie erstreckende Schrauben 16, 16' in zwei Schraubenreihen.

Das Einkuppeln nach dem Aufsetzen des Oberwagens auf den Unterwagen kann mittels des Drehwerkes 4 oder durch hier nicht dargestellte hydraulische Kolben-Zylindereinheiten erfolgen. Es versteht sich von selbst, dass nach dem Einkuppeln das obere ringförmige Element 15 der Rollendrehverbindung gegenüber dem komplementär ausgebildeten Ring 2 alternativ gegenüber dem Oberwagen verriegelt werden muss, damit beim Betätigen des Drehwerkes 4 der Oberwagen gedreht wird.

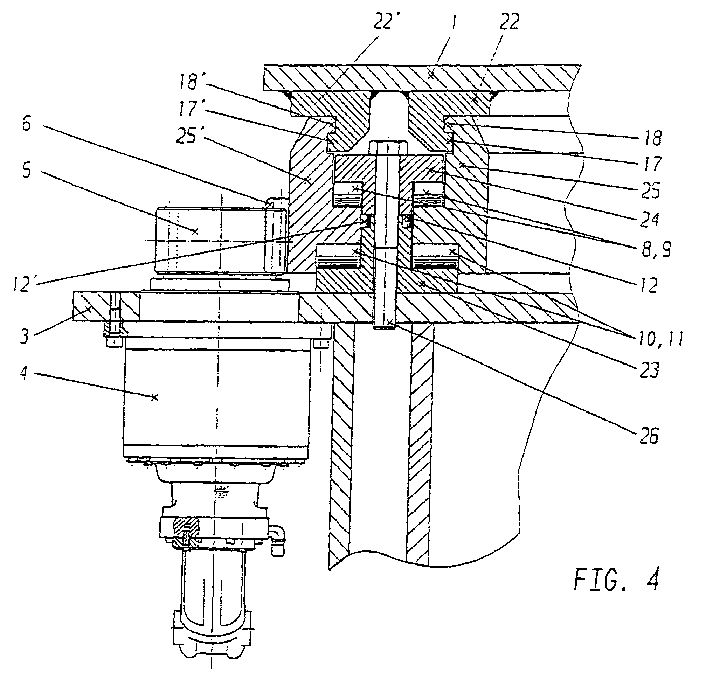

In Figur 4 ist in einem gleichen Schnitt wie Figur 3 eine zweite Ausführungsform dargestellt, wobei für gleiche Teile gleiche Bezugszeichen verwendet worden sind.

Im Unterschied zu Figur 3 besteht der komplementär ausgebildete Ring aus zwei im radialen Abstand voneinander angeordneten Ringen 22, 22', die an der Unterseite der Grundplatte 1 des Oberwagens befestigt sind. Jeder Ring 22, 22' ist im Abschnitt mit Stegen mit entweder einem radial nach innen oder einem nach außen sich erstreckenden Steg 17, 17' versehen.

Der als Rollendrehverbindung ausgebildete und mit einer Außenverzahnung 6 versehene Ring weist zwei feststehende übereinander angeordnete Ringe 23, 24 sowie zwei spiegelbildlich zueinander ausgebildete ringförmige drehbare Elemente 25, 25' auf. Die Drehlagerung ist in diesem Ausführungsbeispiel sechsreihig mit sechs Rollensätzen 8, 9, 10, 11, 12, 12'. Zusammengehalten wird die Rollendrehverbindung durch Schrauben 26 in einer Schraubenreihe. Auch für dieses Ausführungsbeispiel gilt die Notwendigkeit, dass nach dem Aufsetzen des Oberwagens und Kuppeln die ringförmigen drehbaren Elemente 25, 25' gegenüber den Ringen 22, 22' des komplementär ausgebildeten Ringes bzw. des Oberwagens verriegelt werden müssen.

| Bezugszeichenliste | |
|---|---|
| Nr. | Bezeichnung |
| 1 | Grundplatte des Oberwagens |
| 2 | Ring mit Stegen 17, 17' und Ausnehmungen 19, 19' |
| 3 | Bodenplatte des Unterwagens |
| 4 | Drehwerk |
| 5 | Ritzel |
| 6 | Außenverzahnung |
| 7 | feststehender Ring der Rollendrehverbindung |
| 8 - 11 | Rollensatz |
| 12, 12' | Rollensatz |
| 13 - 15 | ringförmige drehbare Elemente der Rollendrehverbindung |
| 16, 16' | Schrauben |
| 17, 17' | Stege des komplementär ausgebildeten Ringes 2 |
| 18, 18' | Stege des ringförmigen Elementes 15 der Rollendrehverbindung |
| 19, 19' | Ausnehmungen des komplementär ausgebildeten Ringes 2 |
| 20, 20' | Ausnehmungen des ringförmigen Elementes 15 der Rollendrehverbindung |
| 21 | Schraube |
| 22, 22' | Ringe des komplementär ausgebildeten Ringes |
| 23, 24 | feststehende Ringe |
| 25, 25' | ringförmig drehbare Elemente der Rollendrehverbindung |
| 26 | Schraube |

## Patentansprüche

1. Mobilkran mit einer lösbaren, den Unterwagen mit dem Oberwagen verbindenden Kupplung und mit einem außen verzahnten drehbar gelagerten Ring (13, 14, 15) dessen Verzahnung mit einem ortsfest angebrachten Antriebsritzel (5) eines Drehwerkes (4) kämmt und der über den Umfang verteilt alternierend gleich lange Abschnitte mit Ausnehmungen (20, 20) und gleich lange Abschnitte mit radial gerichteten Stegen (18, 18) aufweist und mit einem komplementär dazu ausgebildeten Ring (2) wie ein Bajonett-Verschluss kuppelbar ist,
**dadurch gekennzeichnet,**
**dass** der komplementär ausgebildete Ring (2) sowohl auf der Innenseite als auch auf der Außenseite gleich lange Abschnitte mit Ausnehmungen (19, 19') und gleich lange Abschnitte mit radial gerichteten Stegen (17, 17') aufweist und der mit der Außenverzahnung (6) versehene Ring komplementär dazu ebenfalls mit Ausnehmungen (20, 20') und Stegen (18, 18') versehen ist.

2. Mobilkran nach Anspruch 1,
**dadurch gekennzeichnet,**
**dass** die Stege (17, 17', 18, 18') und die Ausnehmungen (19, 19', 20, 20') des jeweiligen Ringes (2) einander gegenüberliegen.

3. Mobilkran nach Anspruch 1 und 2,
**dadurch gekennzeichnet,**
**dass** der mit der Außenverzahnung (6) versehene Ring als mehrreihige Rollendrehverbindung ausgebildet ist.

4. Mobilkran nach Anspruch 1 und 2,
**dadurch gekennzeichnet,**
**dass** der komplementär ausgebildete Ring aus zwei im radialen Abstand voneinander angeordneten Ringen (22, 22') besteht.

5. Mobilkran nach Anspruch 3,
**dadurch gekennzeichnet,**
**dass** die Rollendrehverbindung mindestens vierreihig ausgebildet ist mit einem feststehenden Ring (7) und drei ringförmigen drehbaren Elementen (13 - 15), die über Schrauben (16, 16') in zwei Schraubenreihen miteinander verbunden sind.

6. Mobilkran nach Anspruch 4,
**dadurch gekennzeichnet,**
**dass** die Rollendrehverbindung mindestens vierreihig ausgebildet ist mit einem zweiteiligen feststehenden Ring (23, 24) und zwei spiegelbildlich zueinander ausgebildeten ringförmigen Elementen (25, 25'), die über Schrauben (26) in einer Schraubenreihe miteinander verbunden sind.

7. Mobilkran nach Anspruch 5,
**dadurch gekennzeichnet,**
**dass** die Rollendrehverbindung fünfreihig ausgebildet ist, wobei der fünfte Rollensatz (12) auf der Außenseite des feststehenden Ringes (7) angeordnet ist.

8. Mobilkran nach Anspruch 6,
**dadurch gekennzeichnet,**
**dass** die Rollendrehverbindung sechsreihig ausgebildet ist, wobei der fünfte Rollensatz (12') auf der Außenseite und der sechste Rollensatz (12) auf der Innenseite des feststehenden Ringes (23) angeordnet ist.

9. Mobilkran nach einem der Ansprüche 1 - 8,
**dadurch gekennzeichnet,**
**dass** der komplementär ausgebildete Ring (2) am Oberwagen befestigt ist, wobei die Stege (17, 17') zum Unterwagen hin gerichtet sind

10. Mobilkran nach einem der Ansprüche 1 - 9,
**dadurch gekennzeichnet,**
**dass** das Drehwerk (4) am Unterwagen befestigt ist.

11. Mobilkran nach Anspruch 10,
**dadurch gekennzeichnet,**
**dass** zwei einander gegenüberliegende Drehwerke (4) am Unterwagen befestigt sind.

## Claims

1. Mobile crane with a detachable coupling connecting the upper works and the lower works and having an externally splined, rotatably mounted ring (13, 14, 15), whose splining meshes with a stationarily mounted drive pinion (5) of a slewing gear (4) and which has distributed over the circumference alternately sections of equal length comprising recesses (20, 20) and sections of equal length comprising radially aligned webs (18, 18) and which is couplable to a complementarily formed ring (2) like a bayonet joint, **characterised in that** the complementarily formed ring (2) has sections of equal length comprising recesses (19, 19') and sections of equal length comprising radially aligned webs (17, 17') and the ring provided with the external splining (6) is likewise provided with recesses (20, 20') and webs (18, 18') complementarily.

2. Mobile crane according to claim 1, **characterised in that** the webs (17, 17', 18, 18') and the recesses (19, 19', 20, 20') of the respective ring (2) oppose one another.

3. Mobile crane according to claim 1 and 2, **characterised in that** the ring provided with the external splining (6) is formed as a multiple-tier reel connection.

4. Mobile crane according to claim 1 and 2, **characterised in that** the complementarily formed ring consists of two rings (22, 22') disposed at a radial distance from one another.

5. Mobile crane according to claim 3, **characterised in that** the reel connection has at least four tiers with a fixed ring (7) and three annular rotary elements (13-15) which are connected together via screws (16, 16') in two screw tiers.

6. Mobile crane according to claim 4, **characterised in that** the reel connection has at least four tiers with a two-part fixed ring (23, 24) and two annular elements (25, 25') formed with mirror symmetry with one another, which are connected together via screws (26) in one screw tier.

7. Mobile crane according to claim 5, **characterised in that** the reel connection has five tiers, the fifth roll set (12) being disposed on the outside of the fixed ring (7).

8. Mobile crane according to claim 6, **characterised in that** the reel connection has six tiers, the fifth roll set (12') being disposed on the outside and the sixth roll set (12) on the inside of the fixed ring (23).

9. Mobile crane according to one of claims 1-8, **characterised in that** the complementarily formed ring (2) is fixed to the upper works, the webs (17, 17') being oriented towards the lower works.

10. Mobile crane according to one of claims 1-9, **characterised in that** the slewing gear (4) is fixed to the lower works.

11. Mobile crane according to claim 10, **characterised in that** two opposing slewing gears (4) are fixed to the lower works.

## Revendications

1. Grue mobile comportant un couplage amovible, reliant le chariot au châssis tournant, et un anneau (13, 14, 15) denté à l'extérieur et monté de façon rotative, dont la denture engrène avec un pignon d'entraînement (5) agencé à poste fixe d'un dispositif de rotation (4) et qui comporte, répartis sur la périphérie, de façon alternative, des tronçons de même longueur comprenant des évidements (20, 20') et des tronçons de même longueur comprenant des nervures (18, 18') orientées radialement et qui peut être couplé à un anneau (2) réalisé de façon complémentaire à ce dernier, sous forme d'un emboîtement à baïonnette,
**caractérisée en ce que** l'anneau (2) réalisé de façon complémentaire comporte, aussi bien sur la face interne que sur la face externe, des tronçons de même longueur comprenant des évidements (19, 19') et des tronçons de même longueur comprenant des nervures (17, 17') orientées radialement, et l'anneau muni de la denture externe (6) est également muni, de façon complémentaire à ces derniers, d'évidements (20, 20') et de nervures (18, 18').

2. Grue mobile selon la revendication 1,
**caractérisée en ce que** les nervures (17, 17', 18, 18') et les évidements (19, 19', 20, 20') de l'anneau correspondant (2) sont respectivement opposés.

3. Grue mobile selon l'une des revendications 1 et 2,
**caractérisée en ce que** l'anneau muni de la denture externe (6) est réalisé sous forme d'une liaison rotative à rouleaux à plusieurs rangs.

4. Grue mobile selon l'une des revendications 1 et 2,
**caractérisée en ce que** l'anneau réalisé de façon complémentaire est constitué de deux anneaux (22, 22') agencés en étant écartés radialement l'un de l'autre.

5. Grue mobile selon la revendication 3,
**caractérisée en ce que** la liaison rotative à rouleaux est réalisée au moins à quatre rangs, avec un anneau fixe (7) et trois éléments annulaires rotatifs (13-15) qui sont reliés ensemble par l'intermédiaire de vis (16, 16') dans deux rangs de vis.

6. Grue mobile selon la revendication 4,
**caractérisée en ce que** la liaison rotative à rouleaux est réalisée au moins à quatre rangs avec un anneau fixe (23, 24) en deux parties et deux éléments annulaires (25, 25') réalisés de façon énantiomorphe, qui sont reliés ensemble par l'intermédiaire de vis (26) dans un rang de vis.

7. Grue mobile selon la revendication 5,
**caractérisée en ce que** la liaison rotative à rouleaux est réalisée à cinq rangs, le cinquième jeu de rouleaux (12) étant agencé sur la face externe de l'anneau fixe (7).

8. Grue mobile selon la revendication 6,
**caractérisée en ce que** la liaison rotative à rouleaux est réalisée à six rangs, le cinquième jeu de rouleaux (12') étant agencé sur la face externe et le sixième jeu de rouleaux (12) étant agencé sur la face interne de l'anneau fixe (23).

9. Grue mobile selon l'une des revendications 1 à 8,
**caractérisée en ce que** l'anneau (2) réalisé de façon complémentaire est fixé sur le châssis tournant, les nervures (17, 17') étant dirigées vers le chariot.

10. Grue mobile selon l'une des revendications 1 à 9,
**caractérisée en ce que** le dispositif de rotation (4) est fixé sur le chariot.

11. Grue mobile selon la revendication 10,
**caractérisée en ce que** deux dispositifs rotatifs (4) opposés sont fixés sur le chariot.
